**Europäisches Patentamt**

**European Patent Office**

**Office européen des brevets**

(19)

(11) Veröffentlichungsnummer: **0 337 401**
**A2**

(12)
# EUROPÄISCHE PATENTANMELDUNG

(21) Anmeldenummer: **89106425.5**

(22) Anmeldetag: **11.04.89**

(51) Int. Cl.4: **G06F 15/02**

(30) Priorität: **11.04.88 US 180352**

(43) Veröffentlichungstag der Anmeldung:
**18.10.89 Patentblatt 89/42**

(84) Benannte Vertragsstaaten:
**AT BE CH DE FR GB IT LI NL**

(71) Anmelder: **BERTELSMANN
AKTIENGESELLSCHAFT
Carl-Bertelsmann-Strasse 270
D-4830 Gütersloh 1(DE)**

(72) Erfinder: **Hildebrand, Thoms K.
180 Villa Nueva Court
Mountain View California 94040(US)**
Erfinder: **Stein, Norbert J.
3054 Harding Avenue
Santa Clara California 95051(US)**

(74) Vertreter: **Prietsch, Reiner, Dipl.-Ing. et al
Patentanwälte Dipl.-Ing. Dipl. oec. publ. D.
Lewinsky, Dipl.-Ing. Reiner Prietsch
Gotthardstrasse 81
D-8000 München 21(DE)**

(54) **Elektronisches Buch zum Lesen literaturartiger Informationen aus einem elektronischen Medium.**

(57) Es wird ein universell verwendbares, elektronisches Buch vorgeschlagen, dessen Text- oder Bildinformation in digitaler Form auf einem Speichermedium (10) hoher Speicherkapazität gespeichert ist. Das Speichermedium (10) kann einen oder viele Bände an Information enthalten. Die aus dem Speichermedium (10) ausgelesene, digitale Information wird in Text- und Bildinformation umgewandelt auf einem Display (22) zur Anzeige gebracht. Über entsprechende Befehle ist ein Vorblättern und ein Zurückblättern möglich. Befehle können auch über ein berührungsempfindliches Display oder über ein Display (22) mit einem berührungsempfindlichen Teil (104) gegeben werden. Durch Berühren eines bestimmten Wortes auf einer Seite oder einer bestimmten Stelle auf einer Seite kann zusätzliche Information über dieses Wort oder über diese Stelle angefordert werden. Es wird dann ein neues Feld eingeblendet, das diese zusätzliche Information enthält. Vorzugsweise ist ein zweites Speichermedium geringerer Speicherkapazität vorgesehen, das zum Nachtragen von Information oder zum Aktualisieren von Informationen, die sich auf dem Speichermedium hoher Speicherkapazität befinden, dient. Weiterhin sind Datenbankfunktionen im Sinne einer Wortsuche sowie Notizbuchfunktionen möglich.

FIG. 1

## Elektronisches Buch zum Lesen literaturartiger Informationen aus einem elektronischen Medium

Die Erfindung betrifft ein elektronisches Gerät, das ein Buch ersetzen kann und das Information aus einem Medium hoher Speicherkapazität ausliest.

Bücher sind ein integraler Bestandteil des Lebens in der heutigen Gesellschaft. Es gibt Bücher über eine Vielzahl von Themen, die von Erzählungen bis zu technischen Veröffentlichungen reichen, und es ist kaum vorstellbar, zu leben ohne von Zeit zu Zeit irgendein Buch oder eine Zeitschrift zu lesen. Manche Bücher, wie etwa Erzählungen, werden irgendwann einmal geschrieben und veralten nicht. Andere Bücher, wie solche, die sich auf Technik beziehen, veralten, so daß Neuausgaben oder Ergänzungsbände notwendig werden, um das Thema weiterhin adäquat zu beschreiben.

Die herkömmliche Form von Büchern besteht aus bedrucktem Papier, wobei jeweils zwei Buchseiten ein Papierblatt einnehmen. Der Buchumschlag kann entweder aus einer Einbanddecke bestehen, die ihrerseits aus irgendeiner Sorte von Karton oder Pappe besteht, oder es kann sich um einen weichen Umschlag handeln, der im allgemeinen aus einer dickeren Papiersorte als die bedruckten Seiten besteht. Problematisch ist diese Form der Informationsspeicherung einerseits im Hinblick auf die schwindenden Rohstoffquellen, die gewöhnlich zur Herstellung von Papier und Pappe benutzt werden, und andererseits im Hinblick auf die Größe der Bücher.

Seit den letzten Jahren gibt es eine allgemeine Besorgnis über die weltweite Abnahme des Baumbestandes. Letztenendes würde eine weitgehende Vernichtung der Wälder der Erde deren ökologisches Gleichgewicht nachhaltig stören. Ohne Zweifel leistet die Papierherstellung einen erheblichen Beitrag zum Abholzen der Wälder der Erde, und erhebliche Mengen von Papier werden zum Drucken von Büchern verbraucht. Viele Bücher werden jedoch als "Wegwerfartikel" gedruckt und nur einmal gelesen, während andere Bücher (z.B. technische Bücher) oft veralten, so daß sie gegebenenfalls ebenso weggeworfen werden.

Außerdem benötigt man zum Sammeln einer Vielzahl von Büchern viel Platz zu deren Aufbewahrung. Da die Bücher erhebliches Gewicht besitzen können, sind auch entsprechend massive Buchregale notwendig. Daher haben moderne Büchereien eine erhebliche Ausdehnung und physische Größe, um alle gewünschten Bücherbände aufnehmen zu können. Häufig besteht ein die Größe der Sammlung einer Bibliothek begrenzender Faktor in der Menge des Regalraums.

Das beträchtliche Gewicht von Büchern erhöht auch deren Transportkosten.

Bisher gab es keine befriedigende Lösung für die vorstehend genannten Probleme des Verbrauches von natürlichen Resourcen, des Volumens der Bücher, des Gewichts der Bücher und der Veraltung der Bücher. Zwar wurde schon vorgeschlagen, einen tragbaren Computer zum Auslesen der Informationen aus einem Speichermedium wie einer floppy disc zur Wiedergabe dieser Information auf dem Bildschirm des Computers zu benutzen. Dieser Vorschlag hat keine sehr weite Benutzerakzeptanz gefunden, da das Lesen sehr unbequem ist, weil auf einem typischen Bildschirm nicht hinreichend Zeilenraum zur Anzeige von soviel Daten, wie für ein bequemes Lesen erforderlich ist, zur Verfügung steht. Des weiteren entspricht das Lesen von dem Bildschirm eines PC's nicht der Benutzererwartung hinsichtlich "Lesen", daher zögern viele, dieses neue Medium zu übernehmen.

In jüngster Zeit entwickelte Medien zur Datenspeicherung haben eine sehr hohe Speicherkapazität. Ein Beispiel eines solchen Mediums ist die compact disc (CD), die eine Datenspeicherkapazität von etwa 540 MB hat, welche nun zur Speicherung von Audiodaten in digitaler Form zur späteren Verwendung benutzt wird. Dieses Medium hat bekanntlich auf dem Gebiet der qualitativ hochwertigen Audiotechnik allgemeine Akzeptanz gefunden.

Im allgemeinen wird in der Laser-Speichertechnologie ein Medium benutzt, das Bits auf einer Oberfläche aufzeichnet. Diese Bits können von der Oberfläche mittels einen fokussierten Laserstrahles ausgelesen werden. Ein Beispiel für dieses Medium und diese Technologie zeigt die US-PS 4 284 716. Die hieraus bekannte Technologie kann im Rahmen der Erfindung zur Erzielung des angestrebten Ergebnisses benutzt werden.

Der Erfindung liegt die Aufgabe zugrunde, ein Gerät zu schaffen, das die Benutzung eines Aufzeichnungsmediums hoher Speicherkapazität erlaubt, um Papier als Mittel zur Veröffentlichung von Büchern zu ersetzen. Dieses Gerät soll alle Funktionen erfüllen, die ein Buch für seinen Leser erfüllt.

Das Gerät selbst, das das Speichermedium liest, ist wiederverwendbar und kann zum Lesen einer unbegrenzten Anzahl unterschiedlicher Bücher, deren Inhalt sich auf dem Speichermedium befindet, benutzt werden. Bei Benutzung der vorliegenden Erfindung würde eine Bücherei oder Bibliothek lediglich eine Anzahl von Speichervorrichtungen zu enthalten brauchen. Hierdurch würde sich der Verbrauch an Rohstoffen verringern, und eine große Bibliothek würde wesentlich weniger Platz bzw. Volumen brauchen.

Zur Lösung dieser Aufgabe schlägt die Erfindung eine Art elektronisches Buch vor. Dieses elektronische Buch liest Informationen, die in einem Speicher hoher Kapazität wie etwa einem CD-ROM gespeichert ist. Der Lesevorgang erfolgt unter der Kontrolle eines Programms und einer Anzahl von Bedienungstasten, die Unterprogramme in dem Programm definieren. Die gelesene Information wird auf einem Flüssigkristalldisplay (LCD) des elektronischen Buches zur Anzeige gebracht. Das elektronische Buch hat eine Schnittstelle zu einem Medium, das sich zur Speicherung von sehr viel Nutzinformationen eignet. Die auf dem LC-Display wiedergegebene Schriftart ist als Software auf dem Medium gespeichert. Daher können durch Wechseln des Mediums unterschiedliche Schriftarten auf dem Display (oder Bildschirm) wiedergegeben werden. Darüberhinaus können graphische Informationen auf diesem Medium gespeichert sein. Eine spezielle Chipkarte ist zum Nachtragen (updating) für das read-only-memory vorgesehen. Daher können Informationen wie technische Handbücher u.ä. durch Benutzung dieser Chipkarte auf den neuesten Stand gebracht werden. Außerdem gibt es eine Betriebsart, in der eine logische Verbindung zwischen dem Display und dem Medium hergestellt wird, so daß durch Aktivieren eines Teils des Displays ein Bezug zu Informationen hergestellt wird, die sich auf dem Medium hoher Kapazität befinden und diesen Teil des Displays betreffen. In einer bestimmten Betriebsart kann sich dies auf detaillierte Informationen über eine Struktur, auf die zugegriffen wird, oder auf Definitionen von Worten oder dgl. beziehen. In einer Betriebsart "Graphik" ist Zoomen möglich, um genauere Informationen über einen bestimmten Teil auf dem Display zu erlangen.

Weiterhin gibt es Bedienungstasten, mittels derer das Buch in seiner normalen Betriebsart bedient wird. Diese Bedienungstasten umfassen "Vorblättern" und "Zurückblättern", um die Seitenzahl der wiedergegebenen Buchseite zu erhöhen oder zu vermindern.

Eine Taste "Buchanfang" setzt den Zeiger auf den Beginn des wiederzugebenden Buches. Durch Bedienungstasten können Buchmarken A und B gesetzt oder kann auf diese Buchmarken zugegriffen werden. Eine Taste "Hilfe" ist für weitere Informationen vorgesehen. Eine Taste "Gehe zu Seite" ermöglicht den Zugriff auf eine bestimmte Seite. Eine Anzahl von speziellen Funktionstasten ermöglicht u.a. das Suchen in der Datenbank, z.B. nach bestimmten Wendungen, die in dem elektronischen Buch vorkommen. Eine Notizbuchfunktion gestattet Notizen in unterschiedlichen Teilen des elektronischen Buches, kodiert und adressiert in Entsprechung zu demjenigen Teil des elektronischen Buches, auf den sie sich beziehen. Eine Rechnerfunktion ermöglicht den Gebrauch des elektronischen Buches als Rechner.

Bei einer besonders bevorzugten Ausführungsform ist das LC-Display als sogenannter touch screen ausgebildet und umfaßt einen Berührungssensor. Verschiedene Funktionen des elektronischen Buches können durch einfaches Berühren des LC-Displays an einer bestimmten Stelle aufgerufen werden. Die Benutzung eines touch screen verringert die Zahl der Bedienungstasten, da Teile des Displays für Steuerfunktionen benutzt werden können. Eine bevorzugte Ausführungsform der Erfindung wird nachfolgend anhand der Zeichnung im einzelnen beschrieben werden. Es zeigt:

Figur 1 ein Blockschaltbild des elektronischen Buches nach der Erfindung,

Figur 2 den Stromversorgungs- und Kontraststeuerungsteil des Steuerbereiches 112,

Fig. 3a, 3b ein Flußbild des Hauptprogramms, das das elektronische Buch während seines Normalbetriebes durchläuft,

Figur 4 ein Beispiel eines Menüs , das angezeigt wird, wenn sich auf dem Medium hoher Speicherkapazität mehr als ein Band befindet,

Figur 5 ein Flußbild des Unterprogramms, das während der Funktion "Gehe nach Seite" ausgelöst wird,

Figur 6 ein Beispiel für ein auf dem LC-Display wiedergegebenes Feld "Gehe nach Seite", das mit einem touch screen interface zusammenarbeitet,

Figur 7 ein Prinzipflußbild eines Programms, das die Schritte des Speicherns von Daten auf dem Medium hoher Speicherkapazität enthält,

Figur 8 ein detailliertes Flußbild der Speicherfunktion in Figur 7,

Figur 9 ein Beispiel für die Zoomfunktion,

Figur 10 ein detailliertes Flußbild des Programms, das ausgeführt wird, wenn eine der speziellen Funktionen ausgelöst wird,

Figur 11 ein detailliertes Flußbild des Programms, das ausgeführt wird, wenn die Suchfunktion in der Datenbank ausgelöst wird,

Fig.12,13 und 14 Beispiele der Datenbanksuchfunktion im Betrieb,

Fig. 15 ein detailliertes Flußbild des in der Notizbuchfunktion durchlaufenen Programms und

Figur 16 ein Flußbild der "interrupt"-Routine.

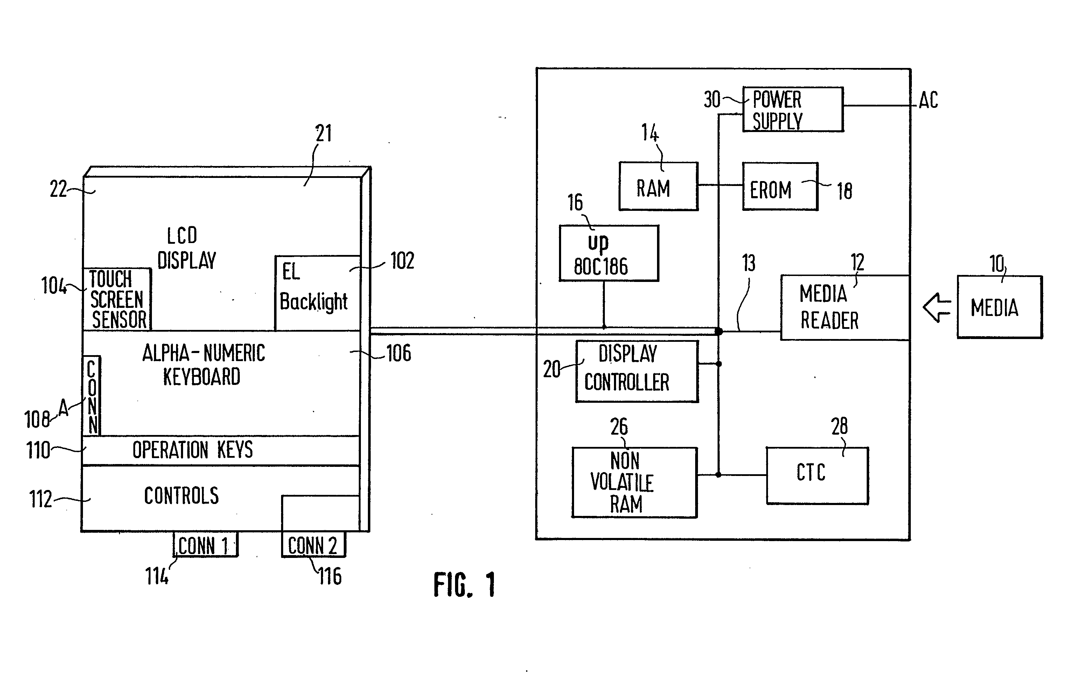

Figur 1 zeigt ein Blockschaltbild der Elektronik des gesamten, betriebsfähigen Gerätes. Der Aufbau und die Arbeitsweise dieses Gerätes werden nachfolgend beschrieben.

Die geschriebene Information, auf die zugegriffen werden soll um sie zu lesen, ist auf einem elektronischen Medium 10 gespeichert. Wie später noch erläutert werden wird, kann dieses Medium ein beliebiger Speicher hoher Kapazität sein, ist jedoch vorzugsweise eine compact disc - nachfolgend lediglich als CD bezeichnet-,eine Drei-Zoll-floppy-disc, eine Chipkarte oder eine Laserkarte. Das Medium 10 wird in den Medienleser 12 eingeführt, der die Information aus dem Medium 10 ausliest. Die ausgelesene Information gelangt von dem Leser 12 auf den Mikroprozessorbus 13 zur weiteren Verarbeitung.

Ein Mikroprozessor 16, vorzugsweise ein 80C186, arbeitet nach einem in einem ROM 18 gespeicherten Programm. Der Mikroprozessor 16 veranlaßt den Leser 12, Daten aus dem Medium 10 auszulesen, wenn dies notwendig ist. Die Arbeitsweise des Mikroprozessors wird später noch anhand entsprechender Flußbilder erläutert werden.

Gesteuert von dem Mikroprozessor, liest der Leser 12 eine vorbestimmte Datenmenge aus dem Medium 10 aus und überträgt diese Daten an ein RAM 14. Die jeweilige Datenmenge soll so groß sein, daß sie eine Fläche eines Displays 22 füllt. Ein Displaycontroller 20, der von dem Mikroprozessor 16 gesteuert wird, formatiert diese Daten so, daß sie auf dem Display 22 wiedergegeben werden können. Ein Zeiger, der sich auf die Seitennummer oder dgl. bezieht, ist in einem nichtflüchtigen RAM 26 (NV RAM) gespeichert. Dies hat die Wirkung eines Buchzeichens, so daß die von dem Benutzer zuletzt gelesene Seite automatisch festgehalten wird und bei der nachfolgenden Benutzung des Buches wiedergegeben wird. Ein Zähler- und Taktgeberchip 28 - kurz als CTC bezeichnet - dient zur Durchführung der internen Programme des Mikroprozessors und zur Ausführung bestimmter Benutzerfunktionen.

Das gesamte Gerät wird aus einer Stromversorgung/Batterie 30 gespeist. Dieser Funktionsblock umfaßt eine Wechselspannungsversorgung, die in Betrieb sein kann, wenn der Benutzer sich an einem festen Ort wie etwa zu Hause oder im Büro befindet. Wenn das Gerät jedoch von der Wechselspannungsquelle abgetrennt und nach wie vor eingeschaltet ist, wird automatisch auf eine eingebaute, wiederaufladbare Batterie umgeschaltet. Daher ist das Gerät auch dann benutzbar, wenn der Benutzer sich nicht in der Nähe einer Stromquelle befindet, beispielsweise unterwegs. Die Stromversorgung 30 dient auch zum Wiederaufladen der Batterie.

Der Benutzer steht mit dem Speichermedium über ein Benutzerinterface 21 in Verbindung. Dieses umfaßt eine Flüssigkristallanzeige 22, nachfolgend kurz LCD oder Display genannt. Dieses Display dient zur Anzeige oder Wiedergabe der aus dem Medium 10 ausgelesenen Buchinformation. In dieser Ausführungsform ist das Display ein super twist LCD mit einer Auflösung von 640 x 480 Pixel und einer Gesamtgröße von etwa 17 x 20 cm. Das LCD 22 umfaßt ein Elektroluminiszenz-Hintergrundlicht 102 zur Beleuchtung des LCDs. Das LCD 22 hat außerdem einen touch screen Sensor 104. Durch Berühren der Oberfläche des LCD 22 mit dem Finger können verschiedene Betriebsarten ausgelöst werden. Ein bekanntes Verfahren hierzu benutzt ein kapazitiv-berührungsempfindliches LCD. Die Betriebsarten werden später noch erläutert werden.

Das Benutzerinterface 21 umfaßt außerdem ein alphanumerisches Tastenfeld 106. Dieses Tastenfeld hat 50 Tasten und 10 Funktionstasten. Diese Tasten werden zur Eingabe von Befehlen und zur Eingabe von verschiedenen Suchkriterien im Suchmodus benutzt. Des weiteren ist ein Stecker 108 zum Anschluß eines externen Tastenfeldes für den Fall vorgesehen, daß der Benutzer ein Tastenfeld oder keyboard normaler Größe benutzen möchte.

Außerdem sind Bedientasten 110 vorgesehen. Jede dieser Bedientasten hat eine bestimmte, später noch erläuterte Funktion. Für die verschiedenen Funktionen des Buches wie etwa zum Ein- und Ausschalten, zur Einstellung der Hintergrundhelligkeit und des Displaykontrastes sind Regler 112 vorgesehen. Ein erster Stecker 114 ist als RS 232-Schnittstelle zur Verbindung des elektronischen Buches mit einem PC oder einem Drucker vorgesehen. Ein zweiter Stecker 116 dient der Verbindung des elektronischen Buches mit einem externen Batterielade- und Netzgerät. Das LC-Display 22 ist nicht maßstäblich dargestellt. Bei maßstäblicher Darstellung würde es den überwiegenden Teil des Benutzerinterface 21 einnehmen.

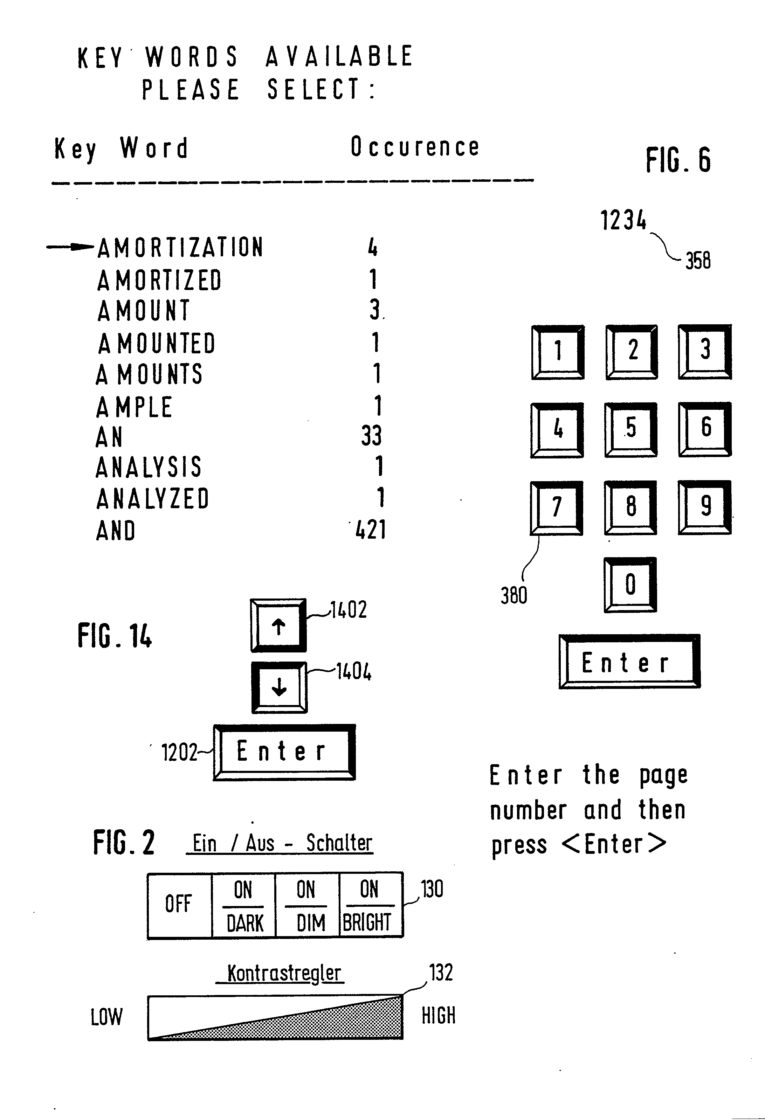

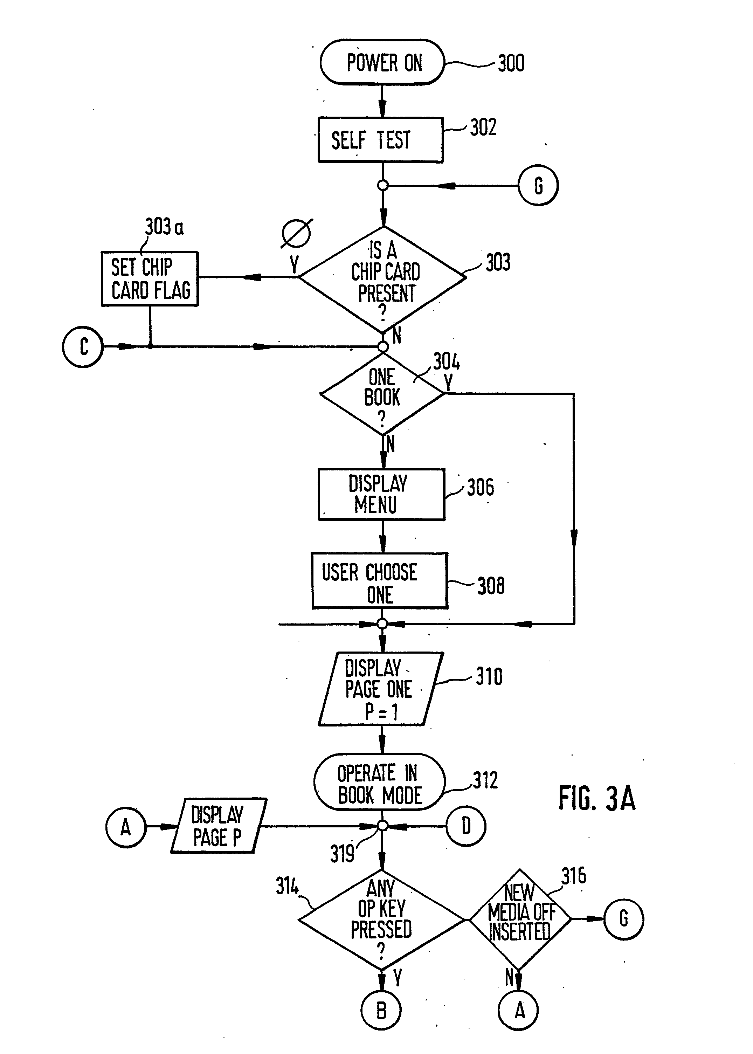

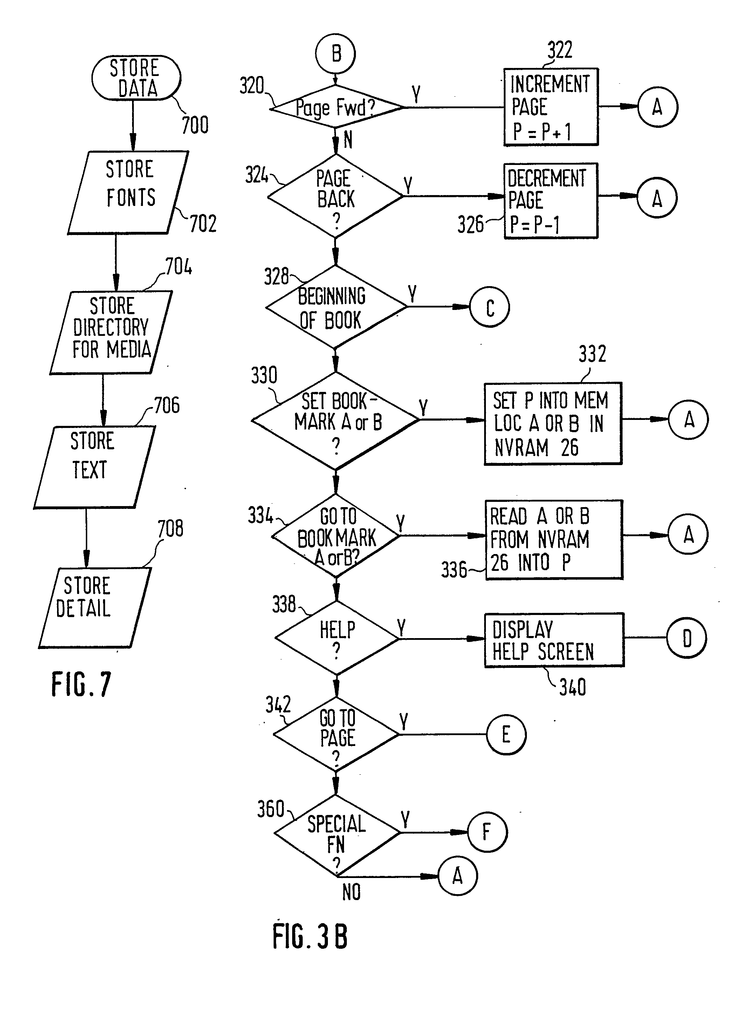

Figur 2 zeigt die Regler 112, zu denen ein EIN/AUS-Schalter 130 und ein Kontrastregler 132 gehören. Der EIN/AUS-Schalter 130 ermöglicht es, ohne Hintergrundbeleuchtung, mit schwacher Hintergrundbeleuchtung oder mit heller Hintergrundbeleuchtung des Displays 22 die Stromversorgung einzuschalten. Der Kontrastregler 132 ermöglicht jede Einstellung zwischen niedrigem und hohem Kontrast. Sowohl der EIN/AUS-Schalter 130 als auch der Kontrastregler 132 können touch screen-Regler oder übliche andere Schalter sein. Durch das Einschalten des Gerätes wird das durch die Flußbilder in den Figuren 3a und 3b veranschaulichte Hauptprogramm durchlaufen.

In Figur 3a wird die Stromversorgung im Schritt 300 eingeschaltet. Anschließend führt das elektronische Buch im Schritt 302 einen kurzen Selbsttest durch.

Im Schritt 303 wird ermittelt, ob eine "Chipkarte" vorhanden ist. Diese Chipkarte wird zum Updating (Aktualisieren oder Nachtragen) benutzt und später erläutert. Im Schritt 304 wird festgestellt, ob das Medium 10, das eingeschoben worden ist, ein Buch oder mehr als ein Buch umfaßt. Wenn im Schritt 304 nur ein Buch festgestellt wird, wird sofort im Schritt 310 die Seite 1 dieses Buches, die normalerweise die Titelseite oder dgl.

ist, angezeigt oder wiedergegeben. Die Schritte 303, 304 werden beim Einschalten des Gerätes, beim Einsetzen eines neuen Mediums oder bei einem Befehl "Buchanfang" durchlaufen. In all diesen Fällen wird also, sofern sich auf dem Medium nur ein Buch befindet, Seite 1 dieses Buches auf dem Display wiedergegeben.

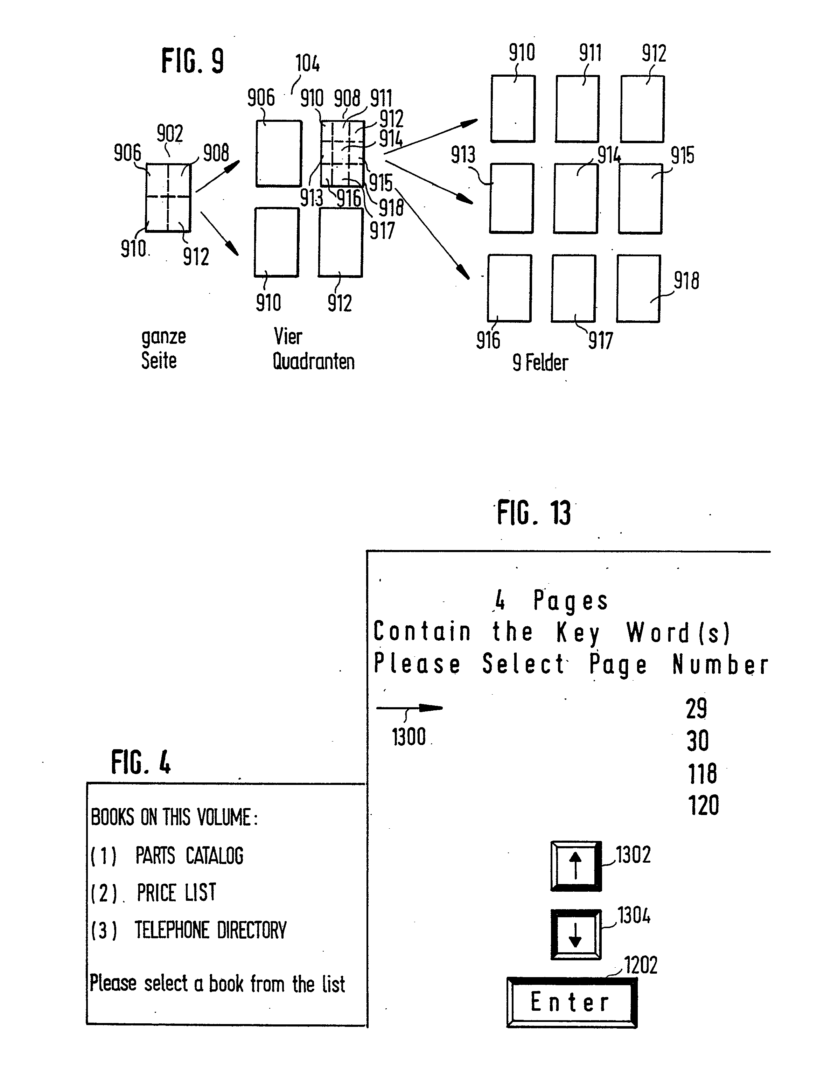

Wird im Schritt 304 mehr als ein Buch festgestellt, so läuft das Programm mit der Seite "Nein" dieses Entscheidungsblocks weiter. Der Mikroprozessor bringt dann im Schritt 306 ein Menü zur Anzeige. Dieses Menü ermöglicht es, viele Bände (oder Bücher) auf z.B. einer CD unterzubringen, zwischen denen der Benutzer dann wählen kann. Statt dessen kann das Medium beispielsweise einen Teilekatalog, eine Preisliste oder ein Telefonbuch enthalten. In jedem dieser Fälle zeigt das elektronische Buch ein entsprechendes, in Figur 4 dargestelltes Auswahlmenü an. Im Schritt 308 trifft der Benutzer seine Wahl. Seite 1 des ausgewählten Buches wird im Schritt 310 angezeigt. Derselbe Schritt wird ausgeführt, wenn im Schritt 304 nur ein Buch festgestellt wird. Mit der Wiedergabe der Seite 1 des Buches geht das Gerät im Schritt 312 in den Buchmodus über.

Der Buchmodus ist die normale Betriebsart, in der das Gerät ein Buch liest. Der Buchmodus gestattet eine Vielzahl von Funktionen im Zusammenhang mit dem gerade gelesenen Buch. Diese Funktionen werden durch Betätigung einer der Bedientasten 110 ausgelöst. Im Schritt 314 werden diese Bedientasten ständig überwacht, um festzustellen, ob eine von ihnen gedrückt wurde. Sofern dies der Fall ist, erfolgt der Übergang auf das Feld B in Figur 3b, in welchem festgestellt wird, welche Bedientaste gedrückt wurde. Wenn keine Bedientaste gedrückt wurde, folgt Schritt 316, in dem ermittelt wird, ob ein neues Medium eingeschoben wurde. Wird dies festgestellt, so wird die Schleife über das Feld G zwischen den Schritten 302 und 303 geschlossen und erneut durchlaufen.

Ergibt die Prüfung, daß kein neues Medium eingeschoben wurde, wird auf das Feld A übergegangen. Dies löst den Schritt 318 aus, der ein I/O-Vorgang der Anzeige der Seite P ist. Der Buchstabe P wird in dieser Beschreibung und in den Flußbildern für einen Zeiger (oder eine Marke) benutzt, der auf eine Seitennummer des gerade gelesenen Buches gesetzt ist. Bei der ersten Ausführung dieses Schrittes ist die Seite 1 nach wie vor in dem Zeiger P akkumuliert, und daher wird im Schritt 318 diese Seite 1 wiedergegeben. Das Programm oder die Steuerung gelangen dann zu einem Knoten 319 zwischen den Schritten 312 und 314 für den Betrieb im Buchmodus.

Wenn im Schritt 314 eine Bedientaste als gedrückt festgestellt wurde, wird nach Figur 3b ermittelt, welche Bedientaste gedrückt wurde. Nachfolgend wird anhand dieses Flußbildes die jeder Bedientaste entsprechende Funktion kurz erläutert. Die erste Feststellung eines bestimmten Befehls erfolgt im Schritt 320, der die Auslösung eines Befehls "Vorblättern" feststellt. Wenn ein Benutzer das Buch liest und umblättern möchte, drückt er die Taste "Vorblättern". Hierdurch wird die Seite mit der nächstfolgenden Seitenzahl auf dem Display 22 wiedergegeben.

Wenn also der Befehl "Vorblättern" festgestellt wird, wird der Seitenzeiger P im Schritt 322 um 1 erhöht. Dies geschieht durch Addieren von 1 (oder jeder gewünschten ganzen Zahl, die eine Seite bezeichnet) zu der Adresse des Seitenzeigers P. Das Programm kehrt dann zum Feld A im Flußbild der Figur 3a zurück, um wieder in den Buchmodus überzugehen.

Wird kein Befehl "Vorblättern" festgestellt, so wird im Schritt 324 der Befehl "Zurückblättern" geprüft. Wenn das Ergebnis dieser Prüfung positiv ist, wird die Seitenzeigeradresse P im Schritt 326 vermindert. Das Programm kehrt dann zum Feld A zurück.

Im Schritt 328 wird der Befehl "Buchanfang" geprüft. Dieser entspricht einem Benutzerbefehl zur Rückkehr zu dem Anfang des Buches. Liegt dieser Befehl vor, wird auf das Feld C in Figur 3a übergegangen. Im Schritt 330 wird geprüft, ob ein Befehl "Buchmarke setzen" vorliegt. Bejahendenfalls wird die Adresse der laufenden Seite in das nichtflüchtige RAM 26 gespeichert. Im Schritt 332 wird der Wert P in den Speicherbereich A oder B im nichtflüchtigen RAM 26 gesetzt, abhängig davon, welche Buchmarke gesetzt werden soll.

Im Schritt 334 wird festgestellt, ob ein Befehl "Gehe zu Buchmarke A" (oder B) vorliegt. Ist dies der Fall, wird die entsprechende Buchmarke (A oder B) aus dem nichtflüchtigem RAM 26 im Schritt 336 ausgelesen. Die ausgelesene Adresse wird dann unter der Adresse P geladen, und das Programm geht auf das Feld A in Figur 3a über. Dies bedeutet, daß im nächstfolgenden Schritt 318 diese Seite P wiedergegeben wird.

Im Schritt 336 wird geprüft, ob eine "Hilfe"-Anforderung vorliegt. Bejahendenfalls wird im Schritt 340 die Hilfe-Anzeige wiedergegeben.

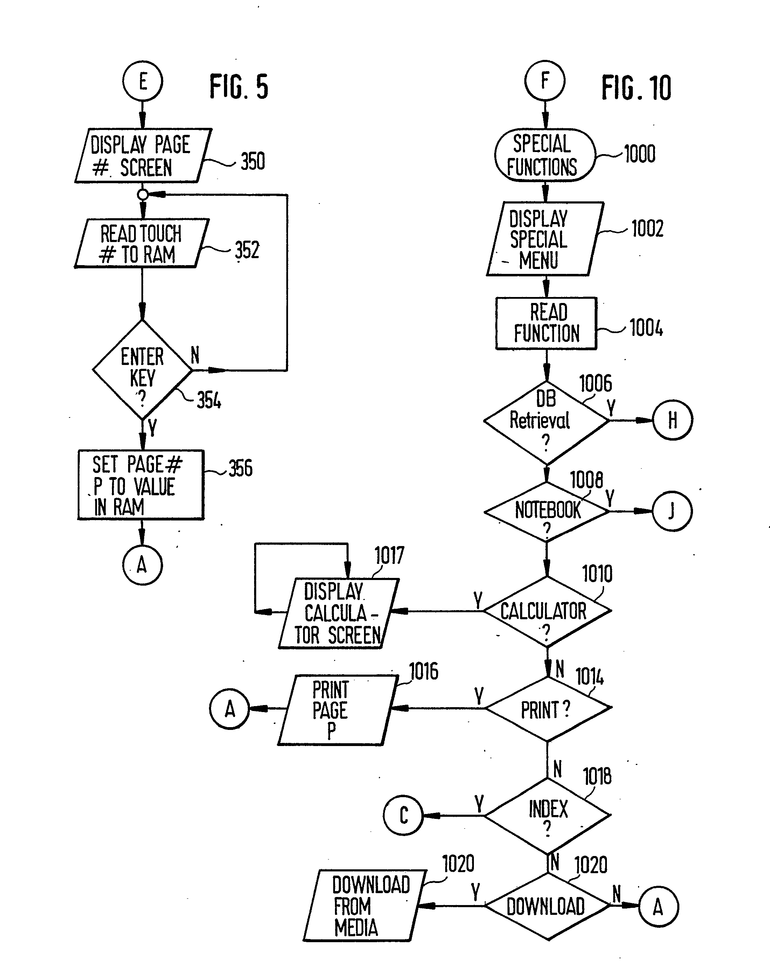

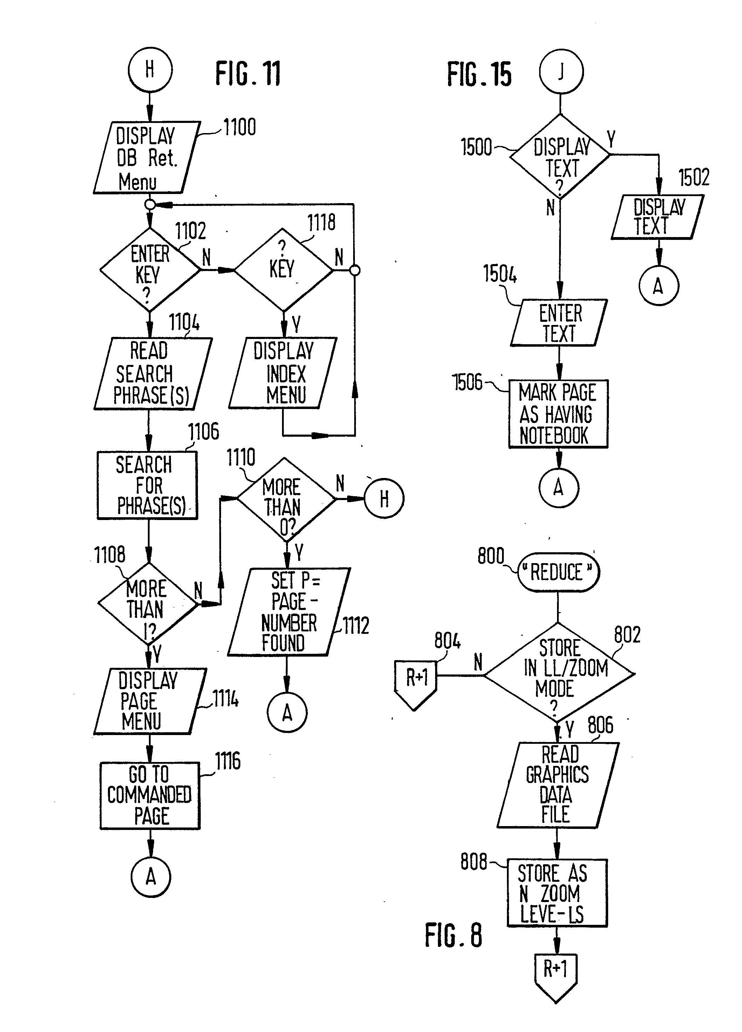

Im Schritt 342 wird die Funktion "Gehe zu Seite" überprüft. Liegt der entsprechende Befehl vor, so geht das Programm auf das Feld E im Flußbild der Figur 5 über. Die Funktion "Gehe zu Seite" nutzt in vorteilhafter Weise die Eigenschaft, daß das Display berührungsempfindliche Felder hat. Durch Drücken der Taste "Gehe zu Seite" wird auf dem Display das in Figur 6 dargestellte Tastenfeld 380 abgebildet. Diese Anzeigefunktion wird im Schritt 350 bewirkt. Der Berührungssensor 104 ermittelt im Schritt 352 die berührte Stelle oder das berührte Feld des Displays. Ein diesem berührten Feld entsprechendes Signal wird an das RAM 14 übermittelt. Im Schritt 354 wird geprüft, ob dieses Signal der Taste "Enter" entspricht. Ist dies nicht der Fall, erfolgt Rückkehr zum Schritt 352,in welchem die nächste berührte Ziffer ermittelt wird. Der Benutzer kann gewünschte Seitenzahlen durch Berührung simulierter Tasten auf dem Display oder durch Benutzung der mechanischen Tasten eingeben, die in dem alphanumerischen Tastenfeld 106 enthalten sind. Nach der Eingabe der gewünschten Seitennummer erscheint diese am oberen Rand des Displays an der mit 358 bezeichneten Stelle. Figur 6 zeigt als Beispiel, daß die Seitennummer 1234 angefordert wurde. Wenn im Schritt 354 die Betätigung der Taste "Enter" festgestellt wird, wird die Seitennummer aus dem RAM geholt und im Schritt 356 auf den Wert P gesetzt. Daher zeigt P auf die Seitennummer, die über das berührungsempfindliche Display eingegeben wurde. Sodann erfolgt der Übergang auf das Feld A in Figur 3a, so daß die angeforderte Seite wiedergegeben wird.

Als letztes wird im Schritt 360 im Flußbild der Figur 3b geprüft, ob irgendeine der Spezialfunktionen aufgerufen wurde. Die Anforderung dieser Spezialfunktionen löst den Übergang auf das Feld F in Figur 10 aus. Die Spezialfunktionen werden später erläutert werden. Wird keine Anforderung einer Spezialfunktion festgestellt, erfolgt wieder die Rückkehr auf das Feld A in Figur 3a.

Nach dieser kurzen Beschreibung der Arbeitsweise, werden nun die benutzten Medien und die darauf gespeicherten Daten ausführlich erläutert.

Als Medium 10 kommen die verschiedensten Datenträger in Betracht. Bevorzugt handelt es sich im Rahmen der Erfindung jedoch um eine CD-ROM. CD's haben eine Speicherkapazität von etwa 540 Megabyte und können daher bis zu 270 000 Seiten an Information enthalten. Das Unterteil des elektronischen Buches umfaßt vorteilhaft eine Schublade, in der der Antrieb für die CD-ROM untergebracht ist.

Alternativ hierzu kann das Medium aus einer 3 $\frac{1}{2}$ " Mikro-floppy-disc bestehen. Diese haben meist ein Speichervermögen von 1,4 Megabyte entsprechend mehreren hundert Seiten an elektronischer Buchinformation. Auf floppy discs können Daten gespeichert oder ausgelesen werden. Floppy discs können auch auf einem PC, der mit einem 3 $\frac{1}{2}$ Zoll Laufwerk ausgerüstet ist, beschrieben und dann direkt in dem elektronischen Buch gelesen werden.

Schließlich kann Information auch von einer statischen RAM-Chipkarte ausgelesen werden. Diese Chipkarte dient zur Vornahme von Änderungen oder zum Updating des CD-ROM-Mediums und erspart daher dessen Neuherstellung. Die Chipkarte ermöglicht es auch, persönliche Notizen usw. zu speichern. Die Chipkarte speichert 250 Kilobyte, entsprechend 400 halbvollen Textseiten.

Nachfolgend werden Beispiele für das Speichervermögen dieser Strukturen gegeben. Ein ersten Beispiel ist eine technische Zeichnung mit vielen Details. Hierbei sei angenommen, daß jede sechste Seite eine verkleinerungs-/vergrößerungsfähige Zeichnung (die sogenannte Zoomfunktion wird später erläutert werden) ist, während die anderen fünf Seiten vorwärts und rückwärts indexierter Text sind. Weiterhin sei angenommen, daß hierfür etwa 10 Megabyte für zu speichernde Schriftzeichen benötigt werden. Eine CD-ROM würde in diesem Fall 4732 Seiten aufnehmen können, eine floppy disc 12 Seiten und eine Chipkarte (256 Kilobyte) würde 170 Textseiten ersetzen können.

Ein zweites Beispiel ist ein umfangreiches Buch wie etwa "The IBM PC AT Guide To Operations". Eine CD-ROM würde 15 000 Seiten derartigen Textes aufnehmen können, eine floppy disc 38 Seiten, und eine Chipkarte könnte 284 Seiten aktualisieren oder ersetzen.

Das Werk "The Microsoft Windows Users' Guide" umfaßt 200 volle Seiten mit 70 seitenfüllenden Zeichnungen, die keiner Vergrößerung bedürfen. Eine CD-ROM würde 45 000 derartige Seiten speichern können, eine floppy disc 110 Seiten, und eine Chipkarte könnte 146 Seiten auf den neuesten Stand bringen.

Zufolge der hohen Informationsmenge, die von dem Medium gespeichert werden kann, kann das hier vorgeschlagene elektronische Buch mit zahlreichen vorteilhaften Eigenschaften ausgestattet sein. Diese Eigenschaften sind im Zuge des Speicherverfahrens abrufbar, durch das die Information in dem elektronischen Buch gespeichert wird. Das Verfahren zur Speicherung von Informationen in dem elektronischen Buch wird nachfolgend anhand der Figur 7 erläutert.

Das Flußbild gemäß Figur 7 beginnt mit dem Schritt 700, der den Anfang des Datenspeicherprogramms bezeichnet. Im Schritt 702 werden auf dem Medium 10 Schriftarten gespeichert. Dieses Verfahren macht das elektronische Buch vergleichsweise vielseitiger als einen üblichen Computerleser.

Übliche Computerdisplays oder Bildschirme arbeiten mit einem sogenannten festen Raster von üblicherweise 25 Zeilen und 80 Spalten. Jede Textwiedergabe auf dem Bildschirm arbeitet mit Schriftzeichen, die in dem Computer intern gespeichert sind und nicht geändert werden können.

Anders als der bekannte Computerbildschirm ist das Display des elektronischen Buchs nicht auf ein bestimmtes Raster festgelegt. Vielmehr arbeitet das elektronische Buch mit einer Schriftzeichensoftware, wodurch die auf dem Display wiedergegebene Seite einer Buchseite mit gesetzten (gedruckten) Schriftzeichen ähnlicher wird. Die Schriftzeichensoftware wird auf dem Medium 10 gespeichert und ermöglicht es, im Schritt 702 eine Auswahl unter allen auf dem Medium 10 gespeicherten Schriftarten zu treffen. Die Größe der Schriftzeichen und ihr Aussehen, also Schriftarten wie Helvetica oder Pica Roman, sowie ihre Wiedergabe, z.B. als Fettdruck oder kursiv, können ebenfalls gewählt werden. Neuaufkommende Schriftarten können auf neuen Medien gespeichert werden, so daß auch diese auf dem Display wiedergegeben werden können.

Das elektronische Buch wird also so gemastert (gestaltet, umgebrochen) und gesetzt, wie dies auf dem Medium 10 zusammen mit Seitenzahlen und Seitenverweisungen gespeichert ist. Die Schriftzeichen können auch graphische Information vermitteln. Das elektronische Buch erlaubt die Wiedergabe sowohl von Textseiten als auch von Bildseiten. Da die Auflösung des Displays hoch ist (ca. 30 Punkte je Zentimeter), können auch graphische Informationen (Bilder, Zeichnungen) mit entsprechender Auflösung wiedergegeben werden.

Im Schritt 704 wird das Inhaltsverzeichnis des Mediums gespeichert. Dieses Inhaltsverzeichnis wurde bereits im Zusammenhang mit den Schritten 304 bis 308 und Figur 4 erwähnt. Das Inhaltsverzeichnis gibt die Adressen an, unter denen die verschiedenen Inhalte auf dem Medium gespeichert sind.

Im Schritt 706 wird der eigentliche Text gespeichert. Dieser Text umfaßt die Seiten, die auf dem Display durch Auslösung der verschiedenen Funktionen im Buchmodus wiedergegeben werden.

Der Schritt 708 läuft unter der allgemeinen Bezeichnung "Speichere Einzelheiten". Diese Speicherung von Einzelheiten bezieht sich auf die Fähigkeit des elektronischen Buches, in zwei verschiedenen, vorteilhaften Betriebsarten zu arbeiten, von denen die erste als Zoommodus und die zweite als logischer Verbindungsmodus bezeichnet werden.

Der Zoommodus ermöglicht die Wiedergabe von Originalen mit hoher Auflösung, die selbsttätig in Elemente mit geringerer Auflösung zerlegt werden. Beispielsweise kann eine technische Zeichnung im Format 20 x 28 cm abgetastet und mit 300 Punkten pro Zoll gespeichert werden. Dies würde jedoch zuviele auf einem Display der hier verwendeten Größe wiederzugebende Daten ergeben. Diese Daten sind zwar wichtig, würden aber, sofern wiedergegeben, nicht entzifferbar sein.

Im Rahmen des vorliegenden Vorschlages wurde dieses Problem durch ein Programm "Reduziere" gelöst, das durch Figur 8 erläutert wird. Dieses Programm "Reduziere" ist ein Teil des Schrittes 708 "Speichere Einzelheiten". Das Programm "Reduziere" beginnt mit dem Schritt 800. Im Schritt 802 wird ermittelt, ob die Speicherung im logischen Verbindungsmodus oder im Zoommodus erfolgen soll. Diese Entscheidung kann entweder selbsttätig getroffen werden (durch Prüfung ob mehr Information vorhanden ist, als auf einer Seite wiedergegeben werden kann) oder von Hand durchgeführt werden, wenn der Benutzer die gespeicherte Datenmenge überblickt. Wenn eine Speicherung im logischen Verbindungsmodus (LL-Modus) oder im Zoommodus nicht gewünscht wird, erfolgt Rückkehr zum Schritt 804. Im anderen Fall wird auf den Schritt 806 übergegangen, in welchem der gesamte Graphikdatensatz durch das Programm "Reduziere" gelesen wird.

Dieses Programm zerlegt dann den ursprünglichen Graphikdatensatz in eine vorgegebene Anzahl unterschiedlicher Zoommaßstäbe. Diese vorbestimmte Anzahl ist mit N bezeichnet und kann jede automatisch oder von Hand festgelegte, ganze Zahl sein. Wie in Figur 9 gezeigt, werden jedoch bevorzugt drei Zoommaßstäbe benutzt. In dem ersten Zoommaßstab 902 wird die gesamte Seite wiedergegeben, wobei Einzelheiten infolge der begrenzten Auflösung des Displays verloren gehen. Im zweiten Zoommaßstab 904 wird die Originalseite in vier Quadranten 906, 908, 910 und 912 (in einer 2 x 2-Anordnung) zerlegt, von denen jeder Quadrant eine mittlere Auflösung ermöglicht. Jeder dieser Quadranten wird eine neue, angezeigte Seite. Im dritten Zoommaßstab wird jeder der vier Quadranten in 3 x 3 oder 9 Teilflächen zerlegt. Figur 9 zeigt, daß der Quadrant 908 in die Teilflächen 910 bis 918 zerlegt wurde. Jede dieser 9 Teilflächen hat nun die volle Auflösung der Originalzeichnung. Insgesamt ergibt dies 1 + 4 + 36, also 41 Wiedergabemöglichkeiten für das Originaldokument.

Der Vorteil dieser Verkleinerungs-/Vergrößerungsmöglichkeit besteht darin, daß Einzelheiten eines bestimmten Dokumentes sehr rasch dargestellt werden können. Bekannte Geräte, die eine vergrößerte Wiedergabe bestimmter Ausschnitte aus einem bestimmten Bildschirm ermöglichen, führen die notwendigen Programmschritte nach Auswahl des betreffenden Ausschnittes auf dem speziellen Bildschirm durch. Im Gegensatz dazu werden im Rahmen der Erfindung die für die Vergrößerungen benötigten Daten beim Mastern des Bildes ermittelt, also bevor das Bild auf dem elektronischen Medium gespeichert wird. Daher ist beim Lesen des elektronischen Buches ein praktisch augenblickliches Vergrößern möglich.

Im Schritt 708 "Speichere Einzelheiten" werden auch die Schritte zur Speicherung von Informationen in dem logischen Verbindungsmodus durchgeführt. Dieser logische Verbindungsmodus ist eine Betriebsart, bei der bestimmte Einzeldaten auf einer Seite, beispielsweise ein Wort oder ein Teil einer Zeichnung, sich auf detailliertere, auf einer anderen Seite befindliche Information beziehen. Insoweit besteht Ähnlichkeit zu dem Zoommodus, bei dem ein Teil der Zeichnung in größerer Auflösung, also mit mehr Einzelheiten, wiedergegeben wird. Im logischen Verbindungsmodus kann jedoch ein Teil der Zeichnung mehr Informationen enthalten, die nicht notwendigerweise durch eine Vergrößerung erlangt werden können. Alternativ hierzu kann ein Wort sich auf einen Datensatz oder Textabschnitt beziehen, der über dieses Wort detailliertere Informationen enthält. Daher sind der logische Verbindungsmodus und der Zoommodus miteinander verwandt, wobei der Zoommodus eine spezielle Form des logischen Verbindungsmodus ist.

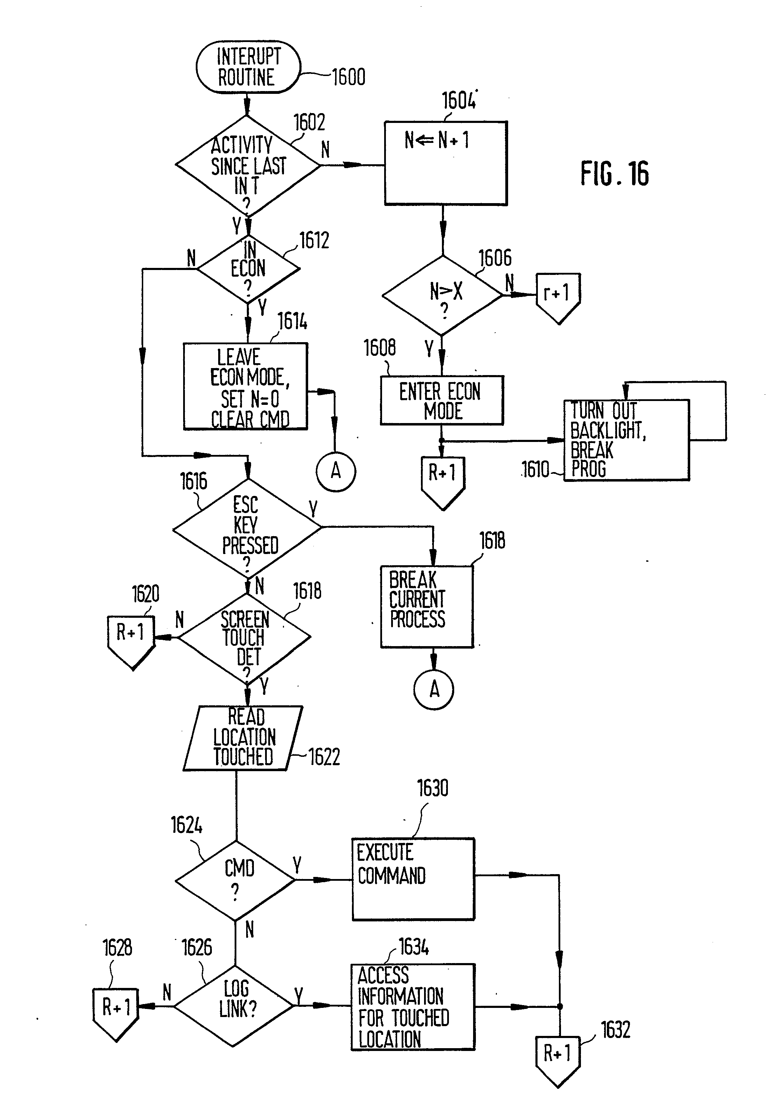

In dieser Ausführungsform werden der logische Verbindungsmodus und der Zoommodus beide durch eine Programmunterbrechung (interrupt) ausgelöst. Daher wird die Arbeitsweise dieser Moden im Zusammenhang mit dem Flußbild der Figur 16 erläutert werden.

Im allgemeinen wird der logische Verbindungsmodus durch Berührung des interessierenden Feldes auf dem Display aktiviert. Hierdurch wird das elektronische Buch veranlaßt, auf Seiten überzugehen, die genauere Informationen über dieses Feld des Displays enthalten. Diese genaueren Informationen können in einer Vergrößerung dieses Feldes oder in zusätzlichen Informationen zu diesem Feld bestehen. Beispielsweise könnte das elektronische Buch die Zeichnung eines Automotors auf dem Display wiedergeben. Durch Berühren des den Vergaser zeigenden Bereiches kann eine Detailzeichnung des Vergasers im Zoommodus zur Wiedergabe gebracht werden. Alternativ hierzu kann das Zeigen auf den Vergaser zur Anzeige von Text über den Vergaser führen. Zeigen auf ein Ventil des Vergasers könnte die Anzeige der Teilnummer und des Preises des Ventils auslösen.

Dies kann in dieser Ausführungsform auch durch Drücken der mechanischen Taste "space" bewirkt werden. Diese Taste "space" hebt die erste "heiße Fläche" in invertiertem Video hervor. Eine heiße Fläche ist ein Sektor des Displays, der sich auf Zusatzinformationen bezieht. In diesem Beispiel könnnte die Lichtmaschine des Automotors hervorgehoben werden. Da dies nicht die gewünschte Fläche ist, würde die Taste "space" erneut gedrückt werden. Dies bewirkt, daß die nächste heiße Fläche in invertierter Videodarstellung angezeigt wird. Wenn dies die gewünschte heiße Fläche ist, läßt sich nun durch Betätigen der Taste "return" die hervorgehobene heiße Fläche auswählen, wodurch detailliertere Informationen zu dieser heißen Fläche zur Anzeige gebracht werden.

Das elektronische Buch kann auch - wie bereits erwähnt -einige Spezialfunktionen ausführen. Wenn im Schritt 360 in Figur 3b die Auslösung einer Spezialfunktion festgestellt wird, so ist zuvor eine dieser Funktionen aufgerufen worden. Das Programm geht dann auf das Feld F über, das das Flußbild gemäß Figur 10 beinhaltet. Gemäß Figur 10 beginnt die Programmablaufsteuerung mit dem Schritt 1000.

Die Spezialfunktionen umfassen folgende Moden:

    1) Datenbanksuche
    2) Notizbuch-Floppy
    3) Notizbuch-Chipkarte
    4) Rechner
    5) Drucken
    6) Buchbandindex
    7) Floppy laden
    8) Chipkarte laden

Wenn die Spezialfunktionstaste gedrückt wird, wird ein Menü dieser Funktionen automatisch auf dem Display im Schritt 1002 wiedergegeben. Der Benutzer kann eine dieser Optionen entweder durch Berühren des entsprechenden Menütextes auf dem Display oder durch Drücken der mechanischen Funktionstaste, die dem Text am nächsten ist, auswählen. Die ausgewählte Funktion wird im Schritt 1004 gelesen.

Im Schritt 1006 wird geprüft, ob die gelesene Funktion die Funktion "Suche in der Datenbank" ist. Diese Datenbanksuchmöglichkeit ermöglicht es dem Benutzer des elektronischen Buches, in diesem nach jedem beliebigen Wort oder jeder beliebigen in dem Buch enthaltenen Wendung zu suchen. Wenn in dem Schritt 1006 die Funktion "Datenbanksuche" festgestellt wird, geht die Ablaufsteuerung auf das Feld H über, das das Flußbild nach Figur 11 umfaßt.

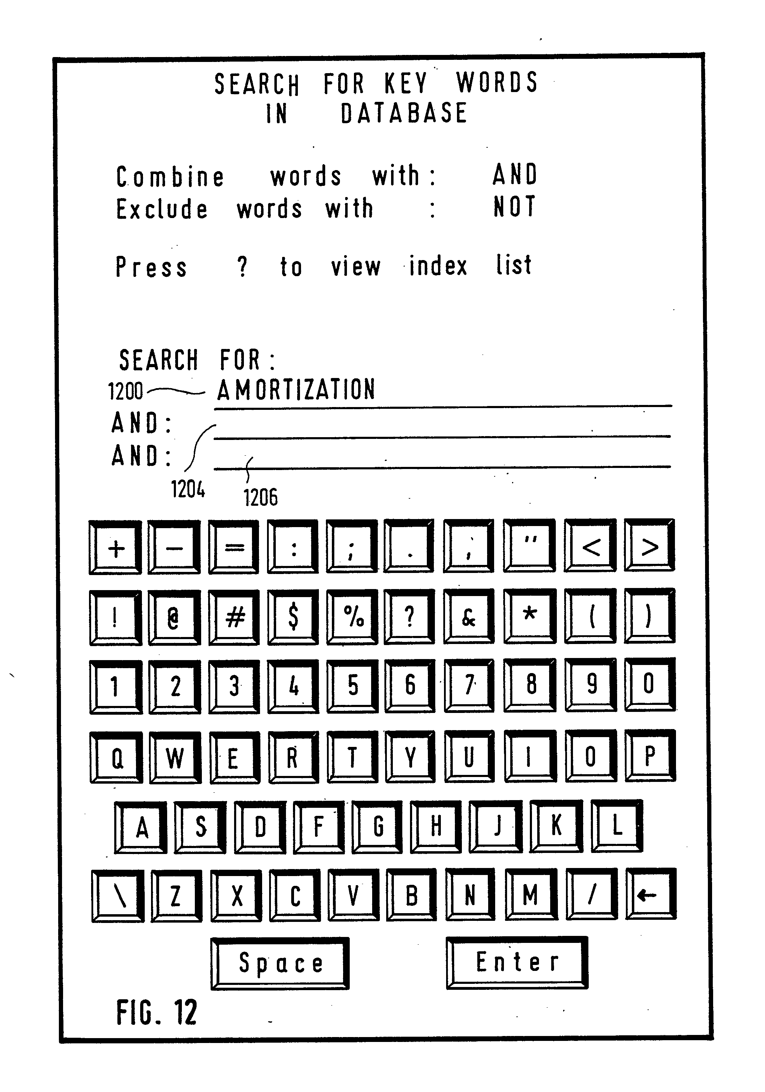

Das Flußbild des Feldes H beginnt mit dem einem Ausführungsbefehl entsprechenden Schritt 1100. In diesem Schritt wird das Datenbanksuchmenü auf dem Display dargestellt, um es dem Benutzer zu ermöglichen, anzugeben, unter welchem Gesichtspunkt gesucht werden soll. Ein Beispiel eines Datenbanksuchmenüs ist in Figur 12 wiedergegeben. Eine einfache Wortsuche wird im Zusammenhang mit den Figuren 12 bis 14 beschrieben.

In dem Beispiel der Figur 12 sucht der Benutzer nach dem Wort "amortization" in dem Buch. Der Benutzer gibt hierzu das Wort in die erste Wortsuchezeile 1200 ein und schließt die Eingabe durch Drücken der Taste 1202 "Enter" ab. Das Drücken der Taste 1202 "Enter" wird im Schritt 1102 festgestellt, woraufhin das gesuchte Wort im Schritt 1104 gelesen wird. Statt nach einem einzigen Wort zu suchen, könnte auch nach mehreren Worten gesucht werden. Im Schritt 1106 wird dann nach diesem Wort gesucht. Wenn dieser Schritt abgeschlossen ist, wird im Schritt 1108 ermittelt, ob das Wort mehr als einmal auftritt. Ist dies nicht der Fall, geht das Programm auf den Schritt 1110 über, in dem ermittelt wird, ob mehr als null Worte festgestellt wurden. Gibt es nicht mehr als null Worte, so ist das gesuchte Wort "amortization" nirgendwo in dem Buch gefunden worden. An diesem Punkt kann eine entsprechende Meldung erfolgen, und die Ablaufsteuerung kehrt zum Feld A zurück, wodurch das Datenbanksuchmenü wieder auf dem Display erscheint und die Programmablaufsteuerung mit dem Schritt 1100 beginnt. Der Benutzer kann dann ein anderes gesuchtes Wort eingeben oder kann die Suche durch Drücken der Taste "Escape" (Abbruch) beendigen. Die Funktion der Taste "Escape" wird im Zusammenhang mit Figur 16 erläutert werden, in der die Programmabbruchroutine dargestellt ist.

Wenn das Ergebnis der im Schritt 1110 erfolgenden Prüfung positiv ist, wurde das Wort "amortization" genau einmal in dem Buch gefunden. Hieran schließt sich der Übergang auf den Schritt 1112 an, in welchem der Zeiger P auf die Seite, die dieses Wort enthält, gesetzt wird. Es folgt dann das Feld A in Figur 3a, das zur Anzeige der Seite und zum erneuten Eintritt in den Buchmodus führt. Von da an sind alle Buchmodusfunktionen einschließlich des Befehls "Vorblättern" freigegeben.

Wenn das Ergebnis der Prüfung im Schritt 1108 positiv ist, wurde das gesuchte Wort mehr als einmal festgestellt. Im Schritt 1114 wird dann das Seitenmenü angezeigt. Dieses Seitenmenü ist in Figur 13 in Form eines Beispiels dargestellt, bei dem vier Seiten ermittelt wurden, die das gesuchte Wort enthalten. Ein Auswahlpfeil 1300 zeigt auf eine dieser Seiten. Der Auswahlpfeil 1300 kann über die Zeigertasten 1302 und 1304 nach oben und nach unten bewegt werden. Wenn der Auswahlpfeil auf die gewünschte Seite zeigt, wird die Taste 1202 "Enter" gedrückt. Dies löst einen Übergang auf die bezeichnete Seite im Schritt 1116 aus, wobei die Ablaufsteuerung dann ihrerseits auf das Feld A in Figur 3a übergeht.

Entscheidet der Benutzer, daß er die ausgewählte Seite nicht benötigt, kann er zu dem Datenbanksuchmodus zurückkehren. Dies wird im Schritt 360 in Figur 3b mit der Prüfung auf eine Spezialfunktion festgestellt, mit nachfolgendem Übergang auf das Flußbild der Figur 10 und der Ermittlung des Datenbanksuchbefehls im Schritt 1006. Im Schritt 1100 wird dann das Datenbanksuchmenü angezeigt, wobei das Suchwort nach wie vor in diesem Menü enthalten ist. Durch Drücken der Taste "Enter" wird im Schritt 1114 wieder das Seitenauswahlmenü zur Anzeige gebracht. Der Auswahlpfeil 1300 ist dann auto matisch auf die nächste Seite gerichtet, und durch Drücken der Taste "Enter" wird diese Seite ausgewählt. Auf diese Weise kann eine lange Liste möglicher Seiten rasch durchgeprüft werden.

Suchprozeduren können auch im frei gewählten Format erfolgen. Diese freiformatierte Suche arbeitet mit einem Sternchen und ermittelt alle Worte, die den vor dem Sternchen stehenden Wortteil gemeinsam haben. Beispielsweise würde eine Suche nach dem Wortteil "amort*" zur Ermittlung aller Seiten führen, die Worte enthalten, deren Anfang "amort" lautet, also beispielsweise "amortize", "amortization", amortizing", usw.

Der Schritt 1106 in Figur 11 lautet "Suche nach Worten", denn über die drei Eingabezeilen 1200, 1204 und 1206 in Figur 12 kann mehr als ein Suchwort eingegeben werden.

Wenn auf irgendeiner Zeile mehr als ein Wort eingegeben wird, werden diese mehreren Worte als "und"-Kombination behandelt. Die Suche nach diesen mehreren Worten wird dann im Sinne einer Suche nach Seiten, die beide eingegebenen Worte bzw. alle eingegebenen Worte enthalten, durchgeführt.

Wenn Eingaben in mehr als eine Zeile erfolgen, werden diese Zeilen als "oder"-Kombination behandelt. Es wird dann nach Seiten gesucht, die wenigstens irgendeine der in einer Zeile stehenden Wortkombinationen enthalten.

Wenn im Schritt 1102 festgestellt wurde, daß die Taste 1202 "Enter" nicht gedrückt wurde, wird im Schritt 1118 geprüft, ob die Taste "?" gedrückt wurde. Diese Taste ist ein Anforderungsbefehl für zusätzliche Hilfe. Wenn der Benutzer nicht genau weiß, nach welchem Suchwort er suchen lassen möchte, kann er eine alphabetische Liste aller verfügbaren Suchworte anfordern. Wenn beispielsweise der Sucher ein Wort eingibt und die Taste "?" drückt, so wird das in Figur 14 dargestellte Menü angezeigt. Dieses Menü zeigt alle verfügbaren Suchworte, beginnend mit dem eingegebenen Wort. Weitere Einträge erscheinen nach Eingabe eines Scroll-Befehls unter Benutzung der Pfeiltasten 1402 und 1404. Nach dem Identifizieren eines Suchwortes durch entsprechendes Verschieben des Pfeiles wird es durch Drücken der Taste 1202 "Enter" ausgewählt. Das ausgewählte Suchwort wird automatisch in die erste Zeile 1200 des Datenbanksuchmenüs gemäß Figur 12 gesetzt, und das Programm springt zu diesem Menü zur Durchführung der Suche zurück.

Die zweite Spezialfunktion ist die Notizbuchfunktion. Wenn im Schritt 1006 in Figur 10 festgestellt wird, daß die Datenbanksuche nicht die ausgewählte Spezialfunktion ist, wird im Schritt 1008 die Notizbuchfunktion geprüft. Die Notizbuchfunktion gestattet es dem Benutzer, freiformatierten Text einzugeben. Der Text wird in einem Schreib/Lese-Medium des elektronischen Buches gespeichert. Dieses Medium ist entweder eine floppy disc oder eine Chipkarte. Der Text wird als Zusatz zu der letzten gelesenen (wiedergegebenen) Seite vermerkt. Jedesmal dann, wenn diese Seite in Zukunft auf dem Display wiedergegeben wird, zeigt ein Hinweiszeichen in einer Ecke der Seite an, daß hierzu hinzugefügter Text verfügbar ist. Dieser hinzugefügte Text kann durch Berühren des Merkzeichens oder durch Druck der Notizbuchtaste zur Anzeige gebracht werden. Wenn im Schritt 1008 die Notizbuchfunktion festgestellt wird, bewirkt die Programmsteuerung den Übergang auf das Feld J in Figur 15. Im Schritt 1500 wird zunächst ermittelt, ob Text zur Anzeige gebracht werden soll. Dies kann beispielsweise durch Feststellung, ob Text verfügbar ist, oder durch Anforderung einer Benutzereingabe geschehen. Wenn diese Prüfung im Schritt 1500 positiv ist, wird der Text im Schritt 1502 angezeigt. Wenn hingegen festgestellt wird, daß kein Text angezeigt werden soll, kann im Schritt 1504 Text eingegeben werden. Nach der Eingabe von Text wird die betreffende Seite dahingehend markiert, daß es hierzu eine Notiz gibt. Dies führt zur Anzeige eines Hinweiszeichens in einer Ecke der Seite, zur Anzeige, daß hinzugefügter Text verfügbar ist.

Die nächste Spezialfunktion ist die Rechnerfunktion, auf die im Schritt 1010 geprüft wird. Wird hierbei festgestellt, daß die Rechnerfunktion angefordert wurde, wird im Schritt 1012 ein Rechnerbildschirm zur Anzeige gebracht. Diese Anzeige gibt einen Rechner für allgemeine Anwendungen mit Tasten und einem numerischen Display auf dem Bildschirm wieder. Der Rechner kann für alle arithmetischen Operationen einschließlich Prozent- und Klammer-Rechnungen benutzt werden. Der Rechner läuft in einer unendlichen Schleife, so daß dieser Modus nur durch einen der Abbruchbefehle und speziell durch die Taste "Abbruch" aufgerufen bzw. verlassen werden kann.

Wenn die Prüfung auf die Anforderung der Rechnerfunktion im Schritt 1010 negativ verläuft, wird im Schritt 1014 geprüft, ob die Druckfunktion angefordert wurde. Wenn dies der Fall ist, wird im Schritt 1016 die Seite B wiedergegeben. Die Seite B ist die zuletzt angeschaute (wiedergegebene) Seite des elektronischen Buches vor der Aktivierung des Menüs der Spezialfunktionen. Diese Seite wird über einen externen Drucker genau in der Form, in der sie auf dem Display wiedergegeben wurde, ausgedruckt. Der Drucker muß hierzu mit der seriellen Schnittstelle 114 verbunden werden und mit dem Epson/IBM-Standard kompatibel sein. Nach dem Ausdrucken der Seite P wird auf das Feld A in Figur 3a zurückgekehrt.

Wenn das Ergebnis der im Schritt 1014 durchgeführten Prüfung negativ ist, wird im Schritt 1018 die Indexfunktion geprüft. Die Indexfunktion veranlaßt die Programmsteuerung zur Rückkehr zum Feld C in Figur 3a. In diesem Feld C wird dann geprüft, ob ein einzelnes Buch sich auf dem Medium befindet, und verneinendenfalls wird ein Menü wiedergegeben, das es dem Benutzer erlaubt, zwischen verschiedenen Bänden/Büchern zu wählen, die sich auf dem betreffenden Medium gespeichert befinden. Wie schon erwähnt, wird dieses Menü automatisch angezeigt, wenn ein neues Medium in das Gerät eingesetzt wird. Wenn der Benutzer jedoch dieses Menü sehen will, ohne das Medium aus dem elektronischen Buch herauszunehmen und wieder einzuführen, übernimmt die Bandindexfunktion diese Aufgabe.

Auf die letzte Spezialfunktion, die Download- oder Ladefunktion, wird im Schritt 1020 geprüft. Verläuft die Prüfung negativ, erfolgt die Rückkehr zum Feld A der Programmablaufsteuerung nach Figur 3a. Ergibt die Prüfung ein positives Ergebnis, so wird im Schritt 1020 der Inhalt des Mediums ausgelesen und geladen. Hierbei wird Information entweder von einer floppy disc oder von einer Chipkarte ausgelesen. Zur Benutzung dieser Funktion muß zuvor auf einem PC ein elektronisches Buch oder eine Notiz erzeugt worden sein. Wenn die Ladefunktion angewählt ist, wird die Information, die zuvor auf diesem Medium gespeichert wurde, in das elektronische Buch geladen.

Damit von dem PC in die floppy disc oder die Chipkarte des elektronischen Buches geladen werden kann, muß das mit dem elektronischen Buch gelieferte Download-Programm auf dem PC aktiviert werden. In das PC-Auswahlmenü wird dann ein Stichwort oder Dateiname eingegeben. Sobald in dem elektronischen Buch die Ladefunktion aktiviert ist, erfolgt ein elektronischer Transfer von dem PC über das elektronische Buch in das elektronische Medium. Übertragungsfehler werden durch Verwendung eines Übertragungsfehler-Korrekturprotokolls selbsttätig korrigiert. Das elektronische Buch meldet, wenn der Ladevorgang erfolgreich abgeschlossen ist. Zu diesem Zeitpunkt ist die floppy disc oder Chipkarte mit einem elektronischen Buch geladen und kann wie jedes andere elektronische Medium verwendet werden. Diese Technik kann zur Erzeugung kleinerer Auflagen von elektronischen Büchern aus den Daten eines PCs verwendet werden.

Dieses Datenaufbereitungsprogramm akzeptiert zur Umwandlung in das elektronische Buchformat Daten in Standardformaten wie Microsoft, WordPerfect, Wordstar, ASCII und bit mapped grafics. Die Daten werden durch das Datenaufbereitungsprogramm in Bücher umgewandelt, die mittels des elektronischen Buches wiedergegeben werden können. Normalerweise wird man die Standardschriftzeichen des elektronischen Buches benutzen, obgleich durch den Benutzer festgelegte Schriftzeichen ebenfalls verwendet werden können, sofern sie in dem Computer vorhanden sind. Das Datenaufbereitungsprogramm setzt das wortindexierte Dokument in Form von Seiten, die fertig für die Wiedergabe mittels des elektronischen Buches sind. Daher erlaubt dieses Datenaufbereitungsprogramm die Benutzung aller zuvor erläuterten Funktionen.

Wie erwähnt, führt das elektronische Buch als erstes im Schritt 303 einen Selbsttest durch, um festzustellen, ob ein Chipkarte vorhanden ist. Jedesmal dann, wenn eine Chipkarte zur gleichen Zeit wie ein CD-ROM vorhanden ist, wird diese Chipkarte automatisch zum Aktualisieren oder Nachtragen der Seiten verwendet. Wenn im Schritt 303 das Vorhandensein einer Chipkarte festgestellt wird, wird im Schritt 303a eine Chipkartenmarke gesetzt. Das Programm kehrt dann zum Schritt 304 zurück. Beim nachfolgenden Lesen jeder Seite wird ermittelt, ob für diese Seite eine Aktualisierung oder eine Notiz verfügbar ist. Bejahendenfalls umfaßt der Schritt 318 die Wiedergabe einer Hinweismarke auf eine Aktualisierungsmöglichkeit zusammen mit der Seite. Durch Berühren der Hinweismarke oder der mechanischen Taste "Aktualisieren" wird dann die von der CD kommende Originalseite durch die auf der Chipkarte befindliche Seite ersetzt. Diese Funktion kann im Schritt 318 bei der Wiedergabe der Seite P enthalten oder durch einen "Interrupt" ausgelöst werden.

Die Interruptroutine beginnt mit dem Schritt 1600 in Figur 16. Ein Interruptbefehl erscheint vorzugsweise in periodischen Zeitabständen, z.B. alle 20 ms. Im Schritt 1602 wird ermittelt, ob seit dem letzten Unterbrechungsbefehl irgendeine Aktivität zu verzeichnen war. "Aktivität" bedeutet die Ausführung irgendeines Befehls, das Berühren des Displays oder ähnliches. Wenn seit dem letzten Unterbrechungsbefehl keine Aktivität festgestellt wird, folgt der Schritt 1604, in welchem der Wert von N um 1 erhöht wird. Dieser Wert N wird als Zeitgeber für einen Sparbetrieb benutzt. Nach der Erhöhung von N wird im Schritt 1606 geprüft, ob N größer als eine Quantität X ist. X bezeichnet die Zeitspanne, nach deren Verstreichen der automatische Übergang auf den Sparbetrieb erfolgt. Im vorliegenden Ausführungsbeispiel sollte X bei etwa 30 000 liegen, so daß der Übergang auf den Sparbetrieb erst dann erfolgt, wenn etwa fünf Minuten verstrichen sind, ohne daß eine Aktivität zu verzeichnen war. Wenn N größer als X ist, wird im Schritt 1608 auf den Sparbetrieb übergegangen.

Im normalen Betriebszustand des elektronischen Buches sind alle mechanischen Tasten und das berührungsempfindliche Display aktiv, und die Hintergrundbeleuchtung ist normalerweise eingeschaltet. Im Sparbetrieb wird die Hintergrundbeleuchtung ausgeschaltet und das berührungsempfindliche Display spricht auf Berührungen nicht mehr an. Durch Drücken irgendeiner der mechanischen Tasten kann das elektronische Buch wieder aktiviert werden. Dann wird die Hintergrundbeleuchtung erneut eingeschaltet, und das elektronische Buch ist ohne Datenverlust voll funktionsfähig, wobei es nach wie vor die zuletzt wiedergegebene Seite zeigt. Der Schritt 1610 steuert das Abschalten der Hintergrundbeleuchtung und den Abbruch des Programms. Im Schritt 1610 erfolgt auch der Eintritt in eine geschlossene Schleife. Die Interruptroutine ist in dieser geschlossenen Schleife weiterhin tätig. Im Schritt 1602 wird ermittelt, ob seit dem letzten Unterbrechungsbefehl irgendeine Aktivität zu verzeichnen war.

Der geschlossene Schleife des Schritts 1610 wird verlassen, wenn im Schritt 1602 seit dem letzten Interrupt Aktivität festgestellt wird und im Schritt 1612 der Sparbetriebzustand festgestellt wird. Im Schritt 1614 werden dann die Schritte zum Verlassen des Sparbetriebes ausgeführt. Zu diesen Schritten gehört das Anschalten der Hintergrundbeleuchtung und das Löschen des laufenden Befehls. Das Programm geht dann auf das Feld A in der Programmablaufsteuerung über, so daß die aktuelle Seite wiedergegeben wird; gleichzeitig wird erneut in den Buchmodus eingetreten.

Wenn im Schritt 1602 Aktivität festgestellt wird, sich das Buch jedoch im Schritt 1612 nicht im Sparbetrieb befindet, erfolgt der Übergang auf den Schritt 1616. In diesem Schritt wird ermittelt, ob die Taste "Escape" gedrückt worden ist. Sofern dies der Fall ist, wird im Schritt 1618 das gerade laufende Programm abgebrochen. Sodann wird auf das Feld A übergegangen, entsprechend einer Wiedergabe der laufenden Seite und dem Eintritt in den Buchmodus.

Wenn im Schritt 1616 festgestellt wird, daß die Taste "Escape" nicht gedrückt wurde, wird im Schritt 1618 geprüft, ob das Display berührt worden ist. Verneinendenfalls erfolgt im Schritt 1620 ein Return. Bejahendenfalls wird im Schritt 1622 die berührte Stelle ermittelt. In den Schritten 1624 und 1626 wird geprüft, ob ein Befehl oder eine logische Verbindung ausgeführt worden sind. Ist keines von beidem der Fall, verläßt die Ablaufsteuerung im Schritt 1628 die Rückkehr zu dem laufenden Programm. Wenn im Schritt 1624 ein Befehl ermittelt wird, wird dieser Befehl im Schritt 1630 ausgeführt, gefolgt von einem Return im Schritt 1632. Wenn im Schritt 1626 eine logische Verbindung festgestellt wird, wird im Schritt 1634 die die berührte Stelle kennzeichnende Information gewonnen. Die berührte Stelle, die im Schritt 1622 gelesen wird, wird mit einer Datei verglichen, die eine Adressenliste von berührten Stellen und logischen Verbindungsinformationen umfaßt. Wenn sich in dieser Datei ein Eintrag für die berührte Stelle findet, wird dieser Eintrag für den Zugriff auf die neue Information benutzt. Hierauf folgt im Schritt 1632 ein Return.

Die bisherige Beschreibung bezieht sich zwar auf ein bevorzugtes Ausführungsbeispiel, jedoch können die Programmablaufsteuerungen für spezielle Programmfunktionen durch andere Ablaufsteuerungen, die dasselbe leisten, ersetzt werden. Auch die Verwendung eines anderen Mikroprozessors ist möglich, ebenso wie Abweichungen von der in Figur 1 wiedergegebenen Struktur des elektronischen Buches. Ferner können viele der durch die Flußbilder veranschaulichten Programmabläufe bzw. Funktionen durch Interruptbefehl ausgelöst werden, während andererseits diejenigen, die als durch Abbruchbefehl ausgelöst beschrieben wurden, auch durch andere Techniken aktiviert werden.

### Ansprüche

1. Elektronisches Buch mit einer ein Display (22) umfassenden Benutzerschnittstelle (21) zur Eingabe von Befehlen und zur Wiedergabe von Informationen auf dem Display (22) nach Maßgabe der Befehle, sowie mit einem Lesemittel (12), das Daten von wenigstens einem Speichermittel (10) liest und mit einer Verarbeitungseinheit (16) die mit der Benutzerschnittstelle (21) und mit dem Lesemittel (12) verbunden ist, dadurch gekennzeichnet, daß die Verarbeitungseinheit (16)

1) Befehle von der Benutzerschnittstelle (21) erhält, worunter Befehle sind, die eine bestimmte Stelle auf dem Display (22) bezeichnen, welche Stelle eine Sache wiedergibt, über die weitere Informationen angefordert werden,

2) das Lesemittel (12) Zugriff auf eine Stelle des Speichermittels (10) nehmen läßt, wo die zusätzliche Information gespeichert ist und das Lesemittel (12) diese zusätzliche Information in Form von Daten auslesen läßt,

3) diese Daten von dem Lesemittel (12) erhält,

4) diese Daten so formatiert, daß sie von dem Benutzer lesbar sind und

5) die formatierten Daten auf dem Display (22) zur Anzeige bringt.

2. Elektronisches Buch nach Anspruch 1, dadurch gekennzeichnet, daß die im Bereich der Benutzerschnittstelle (21) wiedergegebene Information Textinformation und graphische oder Bildinformation umfaßt.

3. Elektronisches Buch nach Anspruch 1 oder 2, dadurch gekennzeichnet, daß das Lesemittel (12) aus dem Speichermittel (10) zusätzlich Schriftzeicheninformationen ausliest, die die Formatierung, in der die Information angezeigt werden soll, beinhalten.

4. Elektronisches Buch nach einem der Ansprüche 1 bis 3, gekennzeichnet durch zwei Speichermittel, von denen eines eine CD-ROM ist.

5. Elektronisches Buch nach Anspruch 4, gekennzeichnet durch eine Chipkarte als zweites Speichermittel und durch Mittel zur Bestimmung ob die Chipkarte Informationen umfaßt, die einer Aktualisierung einer bestimmten Seite entsprechen.

6. Elektronisches Buch nach einem der Ansprüche 1 bis 5, dadurch gekennzeichnet, daß die Verarbeitungseinheit (16) Mittel zur Formatierung der anzuzeigenden Information umfaßt und diese Mittel mit der Schriftzeicheninformation aus dem Speichermedium (10) arbeiten.

7. Elektronisches Buch nach einem der Ansprüche 1 bis 6, dadurch gekennzeichnet, daß das Display (22) eine berührungsempfindliche Fläche umfaßt, die ein Signal liefert, das einer auf der Fläche berührten Stelle entspricht und zur Erzeugung von dieser Stelle zugeordneten Befehlen führt, die zur Wiedergabe der an dieser Stelle angeforderten, zusätzlichen Informationen führen.

8. Elektronisches Buch nach einem der Ansprüche 1 bis 7, dadurch gekennzeichnet, daß Verarbeitungseinheit (16)

6) einen Befehl von dem berührungsempfindlichen Feld des Displays (22) erhält, welcher Befehl einer bestimmten Stelle des Displays (22) zugeordnet ist und

7) ein diese Stelle bezeichnendes Feld zur Anzeige bringt, das zusätzliche Informationen über diese Stelle enthält.

9. Elektronisches Buch nach einem der Ansprüche 1 bis 8, dadurch gekennzeichnet, daß die Verarbeitungseinheit (16) Mittel zum Empfang einer Anzahl von Buchmodusbefehlen enthält, zu denen ein Befehl "vorblättern", der die Seitenzahl der gerade gelesenen Seite erhöht, ein Befehl "zurückblättern", der die Seitenzahl der gerade gelesenen Seite erniedrigt, und ein Befehl "Buchanfang" gehören, der die erste verfügbare Seite zur Anzeige bringt.

10. Elektronisches Buch nach einem der Ansprüche 1 bis 9, dadurch gekennzeichnet, daß die Verarbeitungseinheit (16) Mittel zum Empfang einer Anzahl von Befehlen umfaßt, zu denen ein erster Befehl gehört, der eine Buchmarke setzt, die eine bestimmte Seite bezeichnet, sowie ein zweiter Befehl, der die Rückkehr zu der durch die Buchmarke bezeichneten Seite bewirkt und ggf. ein dritter Befehl, der eine bestimmte Seite zur Anzeige bringt.

11. Elektronisches Buch nach einem der Ansprüche 1 bis 10, dadurch gekennzeichnet, daß die Verarbeitungseinheit (16)

- den Inhalt des Speichermediums (10) durch Auslesen der Daten ermittelt, um festzustellen, ob das Speichermittel (10) einen Band an Informationen oder viele Bände an Informationen enthält,
- auf die erste Seite des einen Bandes Zugriff nimmt, sofern nur ein Band vorhanden ist oder im Fall mehrerer Bände ein Menü zur Anzeige bringt, das diese mehreren Bände durch ihre Titel identifiziert,
- einen Befehl erhält, der einen dieser Bände markiert, sofern mehrere Bände vorhanden sind, und dann auf die erste Seite dieses markierten Bandes Zugriff nimmt.

12. Elektronisches Buch nach einem der Ansprüche 1 bis 11, dadurch gekennzeichnet, daß die Verarbeitungseinheit (16) von dem Lesemittel (12) Daten erhält, die einer Seite an Informationen aus einem Speichermittel (10) mit relativ hoher Speicherkapazität entsprechen, und
- feststellt, ob auf dem Speichermittel relativ niedriger Speicherkapazität Informationen zur Aktualisierung dieser Seite gespeichert sind,
- zutreffendenfalls die Aktualisierungsinformation für diese Seite aus dem Speichermittel relativ niedriger Speicherkapazität ausliest.

13. Elektronisches Buch nach einem der Ansprüche 1 bis 12, dadurch gekennzeichnet, daß das Speichermittel (10) relativ hoher Speicherkapazität ein Nur-Lese-Speicher (ROM) ist und daß das Speichermittel relativ niedriger Speicherkapazität ein Schreib/Lese-Speicher ist und daß Mittel zur Eingabe von Informationen in den Schreib/Lese-Speicher vorhanden sind, die eine Seite aus dem Nur-Lese-Speicher bezeichnen, so daß beim Lesen dieser Seite aus dem Nur-Lese-Speicher ein Hinweis erscheint, der angibt, daß in dem Schreib/Lese-Speicher zusätzliche Information vorhanden ist.

14. Elektronisches Buch nach einem der Ansprüche 1 bis 3, dadurch gekennzeichnet, daß die Verarbeitungseinheit (16)
- Befehle für die Suche nach zumindest einem bestimmten, von dem Benutzer bezeichneten Wort entgegennimmt,
- feststellt, ob dieses Wort irgendwo vorkommt und einen Hinweis zur Anzeige bringt, wenn dies nicht der Fall ist,
- eine Anzeige derjenigen Stellen veranlaßt, an denen das bezeichnete Wort gefunden wurde,
- einen Befehl entgegennimmt, der - bei mehreren Wörtern - eines dieser Wörter als vom Benutzer ausgewählt markiert und
- eine Seite zur Anzeige bringt, die dieses ausgewählte Wort enthält.

15. Verfahren zur Speicherung von Information auf einem Medium, gekennzeichnet durch folgende Schritte:
- Empfang von Daten entsprechend einer auf einem Display wiederzugebenden Information,
- Errechnung erster Daten für eine Wiedergabe der Information,
- Errechnung zweiter Daten entsprechend einer Wiedergabe von nur einem Teil der Information, jedoch mit größerer Auflösung als die Information, in Form einer vergrößerten Darstellung und
- Speicherung der ersten Daten und der zweiten Daten auf dem Medium.

FIG. 1

KEY WORDS AVAILABLE
PLEASE SELECT:

| Key Word | Occurence |
|----------|-----------|
| → AMORTIZATION | 4 |
| AMORTIZED | 1 |
| AMOUNT | 3 |
| AMOUNTED | 1 |
| AMOUNTS | 1 |
| AMPLE | 1 |
| AN | 33 |
| ANALYSIS | 1 |
| ANALYZED | 1 |
| AND | 421 |

FIG. 6

1234
358

| 1 | 2 | 3 |
| 4 | 5 | 6 |
| 7 | 8 | 9 |
380

0

Enter

Enter the page
number and then
press <Enter>

FIG. 14

1402

↑

1404

↓

1202— Enter

FIG. 2   Ein / Aus - Schalter

| OFF | ON DARK | ON DIM | ON BRIGHT | 130 |

Kontrastregler   132

LOW                HIGH

FIG. 3A

EP 0 337 401 A2

## FIG. 7

```
STORE
DATA  ──700

STORE
FONTS  ──702

STORE
DIRECTORY
FOR MEDIA  ──704

STORE
TEXT  ──706

STORE
DETAIL  ──708
```

## FIG. 3 B

B

320 Page Fwd? ──Y──> 322 INCREMENT PAGE P = P+1 ──> A
   │ N
324 PAGE BACK ? ──Y──> DECREMENT PAGE P=P-1 (326) ──> A
   │
328 BEGINNING OF BOOK ──Y──> C
   │
330 SET BOOK-MARK A or B ? ──Y──> 332 SET P INTO MEM LOC A OR B IN NVRAM 26 ──> A
   │
334 GO TO BOOK MARK A or B? ──Y──> READ A OR B FROM NVRAM 26 INTO P (336) ──> A
   │
338 HELP ? ──Y──> DISPLAY HELP SCREEN 340 ──> D
   │
342 GO TO PAGE ? ──Y──> E
   │
360 SPECIAL FN ? ──Y──> F
   │ NO
   A

## FIG. 9

ganze
Seite

Vier
Quadranten

9 Felder

## FIG. 13

4 Pages
Contain the Key Word(s)
Please Select Page Number

1300

29
30
118
120

↑ 1302

↓ 1304

Enter 1202

## FIG. 4

BOOKS ON THIS VOLUME:

(1) PARTS CATALOG

(2) PRICE LIST

(3) TELEPHONE DIRECTORY

Please select a book from the list

FIG. 5

FIG. 10

# FIG. 11

(H)

DISPLAY DB Ret. Menu — 1100

1102 ENTER KEY ? — N → 1118 ? KEY — N →

1104 READ SEARCH PHRASE(S)

Y → DISPLAY INDEX MENU

1106 SEARCH FOR PHRASE(S)

1110 MORE THAN 0? — N → (H)

Y → SET P = PAGE - NUMBER FOUND — 1112

1108 MORE THAN 1? — N →

Y → DISPLAY PAGE MENU — 1114

GO TO COMMANDED PAGE — 1116

(A)

(A)

# FIG. 15

(J)

1500 — DISPLAY TEXT ? — Y → DISPLAY TEXT — 1502

N

1504 ENTER TEXT

1506 — MARK PAGE AS HAVING NOTEBOOK

(A)

(A)

"REDUCE" — 800

804 R+1 ← N — STORE IN LL/ZOOM MODE ? — 802

Y — 806 READ GRAPHICS DATA FILE

808 — STORE AS N ZOOM LEVE-LS

# FIG. 8

R+1

SEARCH FOR KEY WORDS
IN DATABASE

Combine words with: AND
Exclude words with : NOT

Press ? to view index list

SEARCH FOR:
1200 —— AMORTIZATION
AND:
AND:
1204    1206

| + | − | = | : | ; | . | , | " | < | > |

| ! | @ | # | $ | % | ? | & | * | ( | ) |

| 1 | 2 | 3 | 4 | 5 | 6 | 7 | 8 | 9 | 0 |

| Q | W | E | R | T | Y | U | I | O | P |

| A | S | D | F | G | H | J | K | L |

| \ | Z | X | C | V | B | N | M | / | ← |

| Space | Enter |

FIG. 12

FIG. 16

INTERUPT ROUTINE — 1600

1602 — ACTIVITY SINCE LAST INT ?

N → 1604 — N ⇐ N + 1

1606 — N > X ? — N → r+1

Y

1608 — ENTER ECON MODE

R+1

1610 — TURN OUT BACKLIGHT, BREAK PROG

Y → 1612 — IN ECON ?

N

1614 — LEAVE ECON MODE, SET N=0 CLEAR CMD → A

1616 — ESC KEY PRESSED ? — Y → 1618 — BREAK CURRENT PROCESS → A

N

1620 — R+1 — N ← 1618 — SCREEN TOUCH DET ?

Y

READ LOCATION TOUCHED — 1622

1624 — CMD ? — Y → 1630 — EXECUTE COMMAND → R+1 1632

N

1628 — R+1 — N ← 1626 — LOG LINK? — Y → 1634 — ACCESS INFORMATION FOR TOUCHED LOCATION